(19) Europäisches Patentamt
European Patent Office
Office européen des brevets

(11) **EP 1 588 041 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **03782242.6**

(22) Anmeldetag: **27.11.2003**

(51) Int Cl.:
***F02D 41/22*** *(2006.01)*     ***F02D 41/38*** *(2006.01)*

(86) Internationale Anmeldenummer:
**PCT/EP2003/013379**

(87) Internationale Veröffentlichungsnummer:
**WO 2004/055349 (01.07.2004 Gazette 2004/27)**

(54) **VERFAHREN ZUR ÜBERWACHUNG EINER BRENNKRAFTMASCHINE**

METHOD FOR MONITORING AN INTERNAL COMBUSTION ENGINE

PROCEDE POUR SURVEILLER UN MOTEUR A COMBUSTION INTERNE

(84) Benannte Vertragsstaaten:
**DE FR GB IT**

(30) Priorität: **18.12.2002 DE 10259358**

(43) Veröffentlichungstag der Anmeldung:
**26.10.2005 Patentblatt 2005/43**

(73) Patentinhaber: **SIEMENS AKTIENGESELLSCHAFT
80333 München (DE)**

(72) Erfinder: **FATH, Andreas
93058 Erlangen (DE)**

(56) Entgegenhaltungen:
**EP-A- 0 879 950        EP-A- 1 118 761
US-A- 5 377 112**

• **VAN BASSHUYSEN / SCHÄFER: "Handbuch Verbrennungsmotor (2. Auflage), 5.5 Energiebilanz am Motor" Juni 2002 (2002-06) , VIEWEG & SOHN VERLAGSGESELLSCHAFT MBH , BRAUNSCHWEIG / WIESBADEN XP002276796 Seite 46 -Seite 47**

**Beschreibung**

Die Erfindung betrifft ein Verfahren zur Überwachung einer Brennkraftmaschine mit einer Einspritzanlage gemäß dem Oberbegriff des Anspruchs 1.

Aus der Druckschrift US 5 377 112 ist ein Überwachungsverfahren bekannt, welches auf dem Vergleich zwischen modellierten und an einer Brennkraftmaschine tatsächlich erfassten Größen beruht.

Bei modernen Dieselmotoren werden häufig Common-Rail-Einspritzanlagen eingesetzt, bei denen sämtliche Brennräume durch einen gemeinsamen Druckspeicher (engl. Common Rail) mit Kraftstoff versorgt werden. Während des Betriebs wird in dem Druckspeicher hierbei dauerhaft der hohe Einspritzdruck aufrecht erhalten, so dass bei einem fehlerhaften Öffnen eines Injektors (z.B. durch ein Klemmen einer Düsennadel oder eine Verschmutzung im Sitzbereich der Düsennadel) Kraftstoff in den zugehörigen Brennraum der Brennkraftmaschine fließt. Durch eine derartige Störung kann soviel Kraftstoff in den Brennraum eintreten, dass keine Verbrennung oder zumindest Verdampfung des ausfließenden Kraftstoffs mehr möglich ist, so dass sich der Brennraum mit Kraftstoff füllt. Wenn die Kraftstoffmenge in einem Brennraum dessen Totraumvolumen überschreitet, so kommt es zum sogenannten Dieselschlag, da der inkompressible Kraftstoff den Kolben während des Kompressionstakts daran hindert, den oberen Totpunkt zu erreichen. Die dabei entstehenden mechanische Belastungen führen in der Regel zu einem Motorschaden, so dass ein Dieselschlag unbedingt verhindert werden muss.

Der Erfindung liegt somit die Aufgabe zugrunde, bei einer Brennkraftmaschine mit einer Einspritzanlage einen Motorschaden zu verhindern, der durch ein Volllaufen eines Brennraums verursacht werden kann.

Diese Aufgabe wird durch ein Verfahren gemäß Anspruch 1 gelöst.

Die Erfindung umfasst die allgemeine technische Lehre, eine kalorische Bilanz der Brennkraftmaschine zu erstellen (vgl. Van Basshuysen, Schäfer "Handbuch Verbrennungsmotor" 2. Auflage, 5.5, Seiten 46 und 47, Vieweg, Brannschweig/Wiesbaden 2002) und in Abhängigkeit von der Bilanz ein Diagnosesignal zu erzeugen, welches das Betriebsverhalten der Brennkraftmaschine und/oder der Einspritzanlage wiedergibt und dadurch die Verhinderung eines Dieselschlags ermöglicht.

Hierbei geht die Erfindung von der Erkenntnis aus, dass die theoretisch berechnete kalorische Bilanz der Brennkraftmaschine nur dann ausgeglichen ist, wenn die Verbrennung des eingespritzten Kraftstoffs ordnungsgemäß erfolgt. Bei einer unvollständigen Verbrennung des eingespritzten Kraftstoffs aufgrund einer Störung der Einspritzanlage (z.B. bei einem Festklemmen der Düsennadel eines Injektors in der Einspritzstellung) ist die theoretische Energiebilanz der Brennkraftmaschine jedoch unausgeglichen, woran die Störung erkannt werden kann. Das Diagnosesignal gibt deshalb vorzugsweise das Ungleichgewicht der theoretisch ermittelten Energiebilanz wieder.

Bei der erfindungsgemäßen Erstellung der kalorische Bilanz können die Systemgrenzen nahezu beliebig gewählt werden. Beispielsweise ist es möglich, dass die Bilanzhülle die Brennkraftmaschine mit allen Nebenaggregaten einschließt. Es ist jedoch alternativ auch möglich, dass die Bilanzhülle lediglich die Brennkraftmaschine umfasst, wohingegen die Nebenaggregate nicht in der Bilanzhülle enthalten sind.

Im Rahmen der kalorischen Bilanzierung der Brennkraftmaschine wird vorzugsweise eingangsseitig und ausgangsseitig jeweils mindestens eine kalorischen Zustandsgröße der Brennkraftmaschine ermittelt und bei der Bilanzierung berücksichtigt.

Bei einer der eingangsseitig ermittelten kalorischen Zustandsgrößen der Brennkraftmaschine kann es sich unter anderem um die Enthalpie handeln, die der Brennkraftmaschine über den eingespritzten Kraftstoff zugeführt wird.

Die durch den Kraftstoff zugeführte Enthalpie kann aus der Einspritzmenge und dem spezifischen Brennwert des eingespritzten Kraftstoffs berechnet werden, wobei sich die Einspritzmenge im wesentlichen aus der Einspritzdauer ergibt.

Eine der ausgangsseitig ermittelten kalorischen Zustandsgrößen der Brennkraftmaschine ist dagegen vorzugsweise die über den Abgasstrom abgeführte Enthalpie.

Diese abgeführte Enthalpie lässt sich aus dem Luftmassenstrom, der Abgastemperatur und der eingespritzten Kraftstoffmasse berechnen. Die Bestimmung der Abgastemperatur erfolgt vorzugsweise durch einen abgasseitig angeordneten Temperatursensor, während der Luftmassenstrom vorzugsweise durch einen Luftmassenmesser gemessen wird, der im Ansaugbereich der Brennkraftmaschine angeordnet ist.

Es ist jedoch alternativ auch möglich, die durch den Abgasstrom abgeführte Enthalpie aus dem bekannten Hubraum und der Drehzahl der Brennkraftmaschine zu berechnen. Hierzu wird aus dem Hubraum und der Drehzahl zunächst der Luftvolumenstrom berechnet, woraus sich dann in Kenntnis der Dichte der Luftmassenstrom ergibt.

Bei der kalorischen Bilanzierung der Brennkraftmaschine werden vorzugsweise auch die von der Brennkraftmaschine verrichtete mechanische Arbeit sowie die thermischen Verluste der Brennkraftmaschine berücksichtigt.

Falls auch die Nebenaggregate (z.B. Verdichter, Abgasturbine, Ladeluftkühler, etc.) in der Bilanzhülle enthalten sind, so werden bei der kalorischen Bilanzierung vorzugsweise auch die thermischen Verluste der Nebenaggregate sowie die von den Nebenaggregaten verrichtete mechanische Arbeit berücksichtigt.

Die im Rahmen der Erfindung theoretisch berechnete Energiebilanz geht jedoch nur dann exakt auf, wenn die eingespritzte Kraftstoffmenge ordnungsgemäß verbrannt wird. Falls der eingespritzte Kraftstoff dagegen aufgrund einer Fehlfunktion (z.B. Festklemmen der Düsennadel in der Einspritzstellung) nicht vollständig verbrannt wird, so ist die tatsächlich zugeführte Enthalpie wesentlich geringer als die aus der Einspritzmenge berechnete theoretisch zugeführte Enthalpie.

Das erfindungsgemäße bestimmte Diagnosesignal gibt deshalb vorzugsweise die Störung der theoretisch berechneten Energiebilanz wieder und ist somit ein Maß für den nicht verbrannten Kraftstoff, was die Verhinderung eines Dieselschlags ermöglicht.

Einige Brennkraftmaschinen weisen eine Abgasrückführung auf, bei denen ein Teil des Abgases der Brennkraftmaschine entsprechend einer bestimmten Abgasrückführrate in den Ansaugbereich der Brennkraftmaschine zurückgeführt wird. Bei derartigen Brennkraftmaschinen muss die in dem zurückgeführten Abgasstrom enthaltene Enthalpie bei kalorischen Bilanzierung berücksichtigt werden.

Das erfindungsgemäße ermittelte Diagnosesignal wird vorzugsweise mit einem Grenzwert verglichen, um die Störung der theoretischen Energiebilanz quantitativ erfassen zu können. Beim Überschreiten des vorgegebenen Grenzwerts erfolgt vorzugsweise eine Notabschaltung der Brennkraftmaschine, um einen Dieselschlag zu verhindern.

Vorzugsweise wird das Diagnosesignal mit zwei unterschiedliche Grenzwerten verglichen, um entsprechend der Stärke der Störung angepasste Gegenmaßnahmen einzuleiten. Beim Überschreiten des kleineren Grenzwerts erfolgt dann nur die Aktivierung einer Warnlampe, wohingegen ein Überschreiten des größeren Grenzwerts zu der bereits vorstehend erwähnten Notabschaltung führt.

Die Erfindung ist nicht auf die Anwendung bei einem Dieselmotor beschränkt. Vielmehr ist das erfindungsgemäße Verfahren auch bei anderen Typen von Brennkraftmaschinen mit einer Einspritzanlage anwendbar, wie beispielsweise bei Ottomotoren.

Andere vorteilhafte Weiterbildungen der Erfindung sind in den Unteransprüche enthalten oder werden nachstehend zusammen mit der Beschreibung der bevorzugten Ausführungsbeispiele der Erfindung anhand der Zeichnungen erläutert. Es zeigen:

Figur 1a       eine einfache schematische Darstellung der Energieströme in einer Brennkraftmaschine ohne Abgasrückführung,

Figur 1b       eine schematische Darstellung der Energieflüsse in einer Brennkraftmaschine mit Abgasrückführung,

Figur 2a und 2b       vereinfachte Energiebilanzen einer Brennkraftmaschine zur Verdeutlichung des erfindungsgemäßen Prinzips.

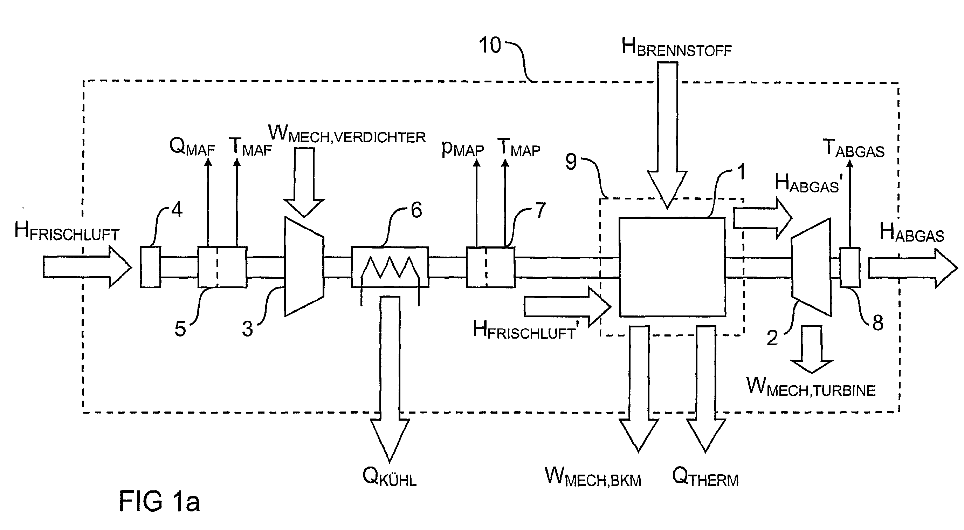

Die schematische Darstellung in Figur 1a zeigt den Aufbau eines Antriebssystems mit einer Brennkraftmaschine 1 sowie die Energieströme in dem Antriebssystem, wobei die Energieströme als Blockpfeile dargestellt sind.

Das hier dargestellte Antriebssystem weist zur Leistungssteigerung einen Abgasturbolader auf, der im wesentlichen aus einer im Abgasstrom der Brennkraftmaschine 1 angeordneten Abgasturbine 2 und einem ansaugseitigen Verdichter 3 besteht, der von der Abgasturbine 2 angetrieben wird.

Der Verdichter 3 saugt über einen Luftfilter 4 Frischluft an, wobei zwischen dem Luftfilter 4 und dem Verdichter ein Sensor 5 angeordnet ist, der die Temperatur $T_{MAF}$ (MAF - Manifold Air Flow) der angesaugten Frischluft und den Luftmassenstrom $Q_{MAF}$ misst. Die Kenntnis dieser Größen ist wichtig für die Berechnung der durch die angesaugte Frischluft zugeführten Enthalpie $H_{FRISCHLUFT}$, wie noch eingehend beschrieben wird.

Stromabwärts nach dem Verdichter 3 ist hierbei ein Ladeluftkühler 6 angeordnet, der die Temperatur der Frischluft absenkt und dem Antriebssystem dadurch Wärmeenergie $Q_{KÜHL}$ entzieht. Diese Kühlung der Frischluft ist sinnvoll, da der Verdichter 3 die Frischlufttemperatur erhöht und die Leistung der Brennkraftmaschine 1 mit zunehmender Frischlufttemperatur sinkt.

Zwischen dem Ladeluftkühler 6 und der Brennkraftmaschine 1 ist ein weiterer Sensor 7 angeordnet, der die Frischlufttemperatur $T_{MAP}$ und den Druck $p_{MAP}$ stromabwärts nach dem Ladeluftkühler 6 misst. Die Kenntnis dieser Größen ist für die Bilanzierung der Energieströme wichtig, wie noch eingehend erläutert wird.

Schließlich weist das Antriebssystem noch einen Temperatursensor 8 auf, der stromabwärts nach der Abgasturbine 2 angeordnet ist und die Abgastemperatur $T_{ABGAS}$ misst.

Bei der Bilanzierung der Energieströme muss zunächst die Bilanzgrenze festgelegt werden, wobei die Zeichnung zwei exemplarische Bilanzgrenzen 9, 10 zeigt. Die Bilanzgrenze 9 umschließt hierbei die Brennkraftmaschine 1, während die Bilanzgrenze 10 das gesamte Antriebssystem mit den Nebenaggregaten umfasst.

Im folgenden wird nun zunächst zur Erläuterung der physikalischen Zusammenhänge eine Energiebilanz für die äußere Bilanzgrenze 10 aufgestellt. Bei einer derartigen Systemgrenze wird dem System Energie zugeführt über die in der Frischluft enthaltene Enthalpie $H_{FRISCHLUFT}$ und die in dem Kraftstoff enthaltene Enthalpie $H_{BRENNSTOFF}$. Anderseits gibt das System hierbei Energie ab über die in dem Abgas enthaltende Enthalpie $H_{ABGAS}$, die thermische Kühlenergie $Q_{KÜHL}$ des Ladeluftkühlers 6, die von der Brennkraftmaschine verrichtete mechanische Arbeit $W_{MECH,BKM}$ und die thermischen Verluste $Q_{THERM}$ der Brennkraftmaschine 1. Die Energiebilanz lautet also für die Systemgrenze 9 wie folgt:

$$H_{FRISCHLUFT} + H_{BRENNSTOFF} = W_{MECH,BKM} + Q_{KÜHL} + Q_{THERM} + H_{ABGAS}.$$

Die in der angesaugten Frischluft enthaltene Enthalpie $H_{FRISCHLUFT}$ lässt sich einfach aus dem Frischluftmassenstrom $Q_{MAF}$, der Frischlufttemperatur $T_{MAF}$ und der spezifischen Wärmekapazität $c_{LUFT}$ von Luft berechnen. Es gilt also:

$$H_{FRISCHLUFT} = f_1 (Q_{MAF}, \ c_{LUFT}, \ T_{MAF})$$

Weiterhin ergibt sich die über den Kraftstoff zugeführte Enthalpie $H_{BRENNSTOFF}$ aus der eingespritzten Kraftstoffmenge $M_{BRENNSTOFF}$ und dem spezifischen Brennwert $H_0$ des Kraftstoffs, wobei eine vollständige Verbrennung des eingespritzten Kraftstoffs angenommen wird. Es gilt also:

$$H_{BRENNSTOFF} = m_{BRENNSTOFF} \cdot H_0$$

Die eingespritzte Kraftstoffmenge $m_{BRENNSTOFF}$ kann wiederum einfach aus der Einspritzdauer, dem Einspritzdruck und der bekannten Durchflussmenge HD des Injektors bei Standardbedingungen berechnet werden und ist somit bekannt.

Ferner ergibt sich die von der Brennkraftmaschine 1 verrichtete mechanische Arbeit $W_{MECH,BKM}$ in Abhängigkeit von der gemessenen Drehzahl und weiteren bekannten Motorparametern aus einem Motorkennfeld. Es gilt also:

$$W_{MECH,TURBINE} = f_2 (Motorparameter)$$

Die thermischen Verluste $Q_{THERM}$ der Brennkraftmaschine 1 und die Kühlenergie $Q_{KÜHL}$ des Ladeluftkühlers 6 lassen sich ebenfalls einfach aus einem Motorkennfeld auslesen:

$$Q_{KÜHL} = f_3 (Motorparameter).$$

Schließlich lässt sich die über das Abgas abgeführte Enthalpie $H_{ABGAS}$ aus der Abgastemperatur $T_{ABGAS}$ berechnen:

$$H_{ABGAS} = f_4 (m_{ABGAS}, \ c_{ABGAS}, \ T_{ABGAS}).$$

Die Abgasmenge $m_{ABGAS}$ ergibt sich wiederum aus dem Frischluftmassenstrom $Q_{MAF}$ und der eingespritzten Kraftstoffmasse $M_{BRENNSTOFF}$, während $C_{ABGAS}$ die bekannte spezifische Wärmekapazität des Abgases ist.

Bei einer ordnungsgemäßen Verbrennung des eingespritzten Kraftstoffs muss die vorstehend beschriebene Energiebilanz ausgeglichen sein. Bei einer unvollständigen Verbrennung des eingespritzten Kraftstoffs aufgrund einer Fehlfunktion (z.B. Festklemmen der Düsennadel eines Injektors in der geöffneten Stellung) führt die Berechnung der durch den Kraftstoff zugeführten Enthalpie $H_{BRENNSTOFF}$ dagegen zu falschen Ergebnissen, so dass die vorstehend beschriebene rechnerische Energiebilanz nicht mehr ausgeglichen ist.

Im folgenden wird nun eine Energiebilanz für die innere Bilanzgrenze 9 des Antriebssystems aufgestellt. Bei einer derartigen Systemgrenze wird dem System Energie zugeführt durch die in der Frischluft vor der Brennkraftmaschine 1 enthaltene Enthalpie $H_{FRISCHLUFT}$' und die in dem eingespritzten Kraftstoff enthaltene Enthalpie $H_{BRENNSTOFF}$. Das System verliert dagegen Energie durch die von der Brennkraftmaschine 1 verrichtete mechanische Arbeit $W_{MECH,BKM}$, die thermischen Verluste $Q_{THERM}$ der Brennkraftmaschine 1 und die im Abgas nach der Brennkraftmaschine enthaltende Enthalpie $H_{ABGAS}$'. Hierbei muss beachtet werden, dass die in der Frischluft enthaltene Enthalpie $H_{FRISCHLUFT}$ vor dem Verdichter 3 nicht gleich der Enthalpie $H_{FRISCHLUFT}$' der Frischluft nach dem Ladeluftkühler 6 ist.

Die Energiebilanz der Brennkraftmaschine 1 lautet also bezüglich der Systemgrenze 9 wie folgt:

$$H_{FRISCHLUFT}' + H_{BRENNSTOFF} = H_{ABGAS}' + W_{MECH,BKM} + Q_{THERM}.$$

Die Berechnung der Größen $H_{BRENNSTOFF}$, $W_{MECH,BKM}$ und $Q_{THERM}$ wurde bereits vorstehend erläutert, während sich die in der Frischluft unmittelbar vor der Brennkraftmaschine 1 enthaltene Enthalpie $H_{FRISCHLUFT}$' wie folgt berechnet:

$$H_{FRISCHLUFT}' = f_6(p_{MAP}, \ T_{MAP}, \ c_{LUFT}, \ Q_{MAF}).$$

Schließlich berechnet sich die im Abgas unmittelbar hinter der Brennkraftmaschine 1 enthaltene Enthalpie $H_{ABGAS}$' wie folgt:

$$H_{ABGAS}' = f_7(m_{ABGAS}, \ c_{ABGAS}, \ T_{ABGAS}).$$

Auch bei der Bilanzgrenze 9 ist die Energiebilanz nur dann ausgeglichen, wenn die rechnerisch ermittelte Enthalpie $H_{BRSNNSTOFF}$ den tatsächlichen Enthalpiewert korrekt wiedergibt, was nur bei einer ordnungsgemäßen Verbrennung des eingespritzten Kraftstoffs der Falls. Bei einer fehlerhaften Verbrennung des eingespritzten Kraftstoffs weicht die rechnerische Enthalpie $H_{BRENNSTOFF}$ dagegen von dem tatsächlichen Wert ab, so dass die Energiebilanz nicht mehr ausgeglichen ist.

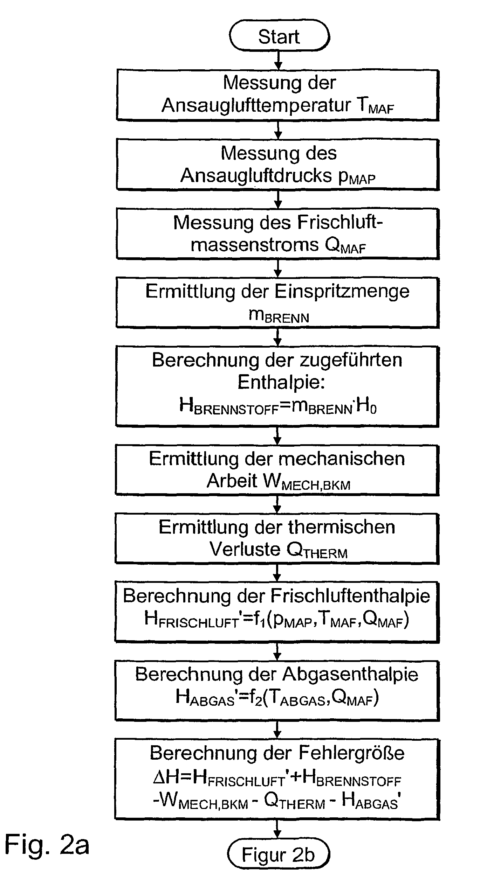

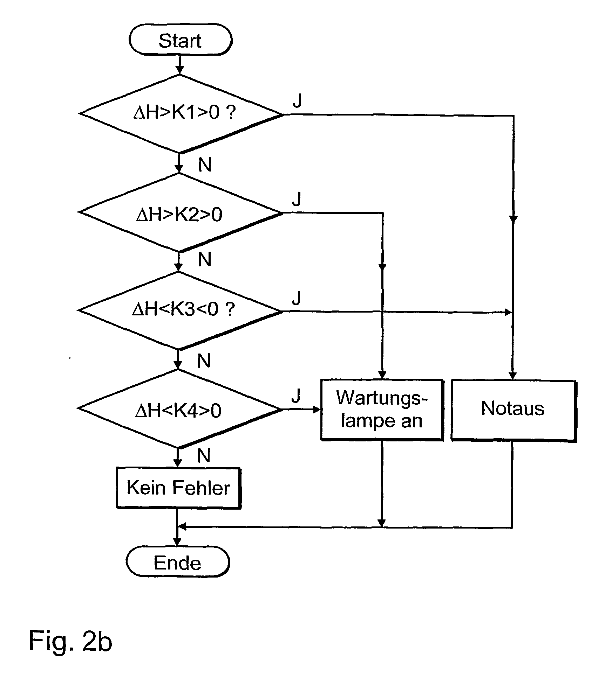

Dies wird bei dem erfindungsgemäßen Verfahren ausgenutzt, das in den Figuren 2a und 2b in Form eines Flussdiagramms dargestellt ist.

Im Rahmen des erfindungsgemäßen Verfahrens misst der Sensor 5 die Ansauglufttemperatur $T_{MAF}$ und den Frischluftmassenstrom $Q_{MAF}$ vor dem Verdichter 3.

Weiterhin misst der Sensor 7 die Frischlufttemperatur $T_{MAP}$ sowie den Druck $p_{MAP}$ nach dem Ladeluftkühler 6.

Darüber hinaus wird die Einspritzmenge $m_{BRENN}$ aus der Motorsteuerung ausgelesen, wobei sich die Einspritzmenge $m_{BRENN}$ aus der Einspritzdauer und dem Einspritzdruck ergibt.

Aus den so ermittelten Größen werden dann nach den vorstehend beschriebenen Formeln die durch die Frischluft zugeführte Enthalpie $H_{FRISCHLUFT}$', die im Kraftstoff enthaltene Enthalpie $H_{BRENNSTOFF}$, die im Abgas enthaltene Enthalpie $H_{ABGAS}$', die thermischen Verluste $Q_{THERM}$ sowie die mechanische Arbeit $W_{MECH,BKM}$ der Brennkraftmaschine 1 berechnet.

Daraus wird dann eine Fehlergröße

$$\Delta H = H_{FRISCHLUFT} + H_{BRENNSTOFF} - W_{MECH,BKM} - Q_{KÜHL} - Q_{THERM} - H_{ABGAS}$$

berechnet, welche die Störung der theoretisch berechneten Energiebilanz wiedergibt.

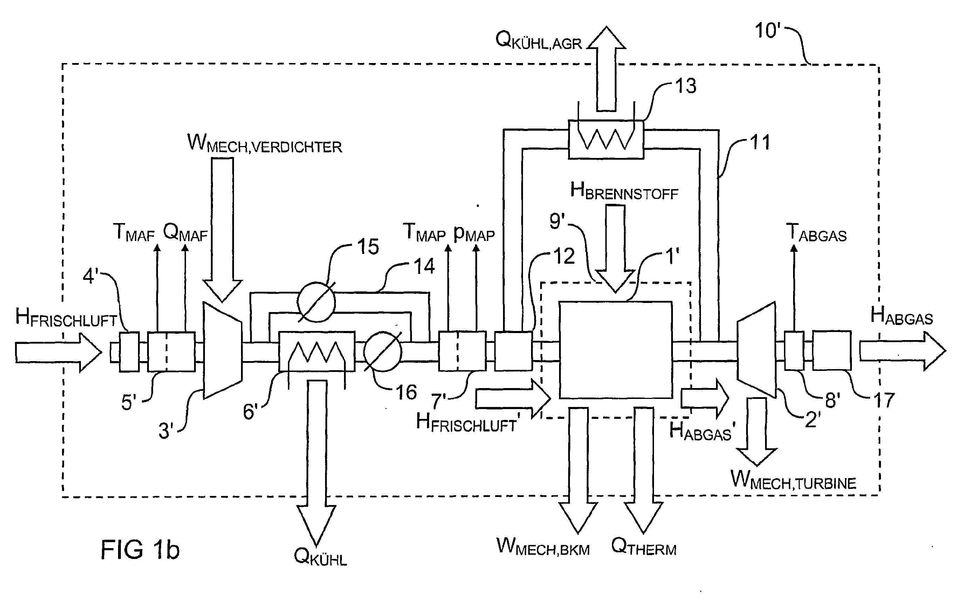

In dem in Figur 1b dargestellten Verfahrensabschnitt wird das Diagnosesignal $\Delta H$ deshalb zunächst mit einem relativ großen Grenzwert K1 verglichen. Falls das Diagnosesignal $\Delta H$ den Grenzwert K1 überschreitet, so bedeutet dies, dass während des Beobachtungszeitraums $t_{TEST}$ eine große Kraftstoffmenge unverbrannt geblieben ist und einen Brennraum angefüllt hat, wodurch die Gefahr eines Dieselschlags besteht. Ein derartiger Dieselschlag entsteht, wenn der unverbrannte Kraftstoff in einem Brennraum das Totraumvolumen des Brennraums überschreitet, da der inkompressible Kraftstoff den Kolben dann während des Kompressionstakts daran hindert, seinen oberen Totpunkt zu erreichen. Beim Überschreiten des Grenzwerts K1 erfolgt deshalb eine Notabschaltung der Brennkraftmaschine.

Andernfalls wird dagegen in einem nächsten Schritt geprüft, ob das Diagnosesignal $\Delta H$ zumindest einen zweiten Grenzwert K2<K1 überschreitet. Falls dies der Fall ist, so wird eine Warnlampe aktiviert, die dem Benutzer eine Störung anzeigt.

Falls das Diagnosesignal ΔH dagegen auch den zweiten Grenzwert K2 unterschreitet, so besteht noch die Möglichkeit, dass der zuviel eingespritzte Kraftstoff noch verbrannt werden konnte. In diesem Fall ist die theoretisch berechnete Enthalpie $H_{BRENNSTOFF}$ kleiner als der tatsächliche Wert, so dass das Diagnosesignal ΔH negativ ist.

Das Diagnosesignal ΔH wird deshalb in einem weiteren Schritt mit einem negativen Grenzwert K3 verglichen, wobei die Brennkraftmaschine 1 sofort abgeschaltet wird, wenn der negative Grenzwert unterschritten wird.

Andernfalls wird das Diagnosesignal ΔH mit einem weiteren negativen Grenzwert K4 verglichen, dessen Betrag kleiner als der Betrag des Grenzwerts K3 ist. Falls das Diagnosesignal ΔH den Grenzwert K4 unterschreitet, so wird eine Warnlampe aktiviert.

Falls dagegen keiner der vorstehend beschriebenen Grenzwerte K1-K4 über- bzw. unterschritten wird, so kann davon ausgegangen werden, dass die theoretisch berechnete Enthalpie $H_{BRENNSTOPF}$ den tatsächlichen Wert korrekt wiedergibt und somit kein Fehler vorliegt.

Das in Figur 1b dargestellte Antriebssystem stimmt weitgehend mit dem in Figur 1a dargestellten Antriebssystem überein, so dass im folgenden zur Vermeidung von Wiederholungen auf die vorstehende Beschreibung verwiesen wird und im folgenden nur die Besonderheiten dieses Ausführungsbeispiels erläutert werden. Darüber hinaus werden in Figur 1b für entsprechende Bauteile dieselben Bezugszeichen wie in Figur 1a verwendet, die lediglich zur Unterscheidung durch ein Apostroph gekennzeichnet sind.

Eine Besonderheit dieses Antriebssystems besteht in de Abgasrückführung. So zweigt zwischen der Brennkraftmaschine 1' und der Abgasturbine 2' ein Abgasrückführkanal 11 ab, der mit einem Abgasrückführventil 12 im Ansaugtrakt der Brennkraftmaschine 1' verbunden ist. In Abhängigkeit von der Stellung des Abgasrückführventils 12 kann somit ein Teil des Abgases in den Ansaugtrakt der Brennkraftmaschine 1' zurückgeführt werden. In dem Abgasrückführkanal 11 ist hierbei ein Kühler 13 angeordnet, der das zurückgeführte Abgas kühlt, wobei Wärmeenergie $Q_{KÜHL,AGR}$ an die Umgebung abgegeben wird.

Eine weitere Besonderheit dieses Ausführungsbeispiels besteht in einer Umgehungsleitung 14, die eine Umgehung des Ladeluftkühlers 6' ermöglicht. In der Umgehungsleitung 14 ist hierbei ein Ventil 15 angeordnet, das den Nebenstrom durch die Umgehungsleitung steuert, während in der Hauptleitung ein Ventil 16 angeordnet ist, das den Hauptstrom steuert.

Schließlich ist im Abgasstrom der Brennkraftmaschine 1' bei diesem Ausführungsbeispiel ein Abgaskatalysator 17 angeordnet, um das Abgas zu reinigen.

Das in den Figuren 2a und 2b dargestellte erfindungsgemäße Verfahren ist bei dem Antriebssystem gemäß Figur 1b ebenfalls anwendbar, wobei lediglich die Berechnung der verschiedenen Größen $H_{FRISCHLUFT}$ bzw. $H_{FRISCHLUFT}'$, $W_{MECH,VERDICHTER}$, $H_{BRENNSTOFF}$, $W_{MECH,BKM}$, $Q_{KÜHL,TURBINE}$, $Q_{KÜHL,AGR}$, $Q_{THERM}$, $W_{MECH,TURBINE}$, $H_{ABGAS}$ bzw. $H_{ABGAS}'$ nach entsprechend angepassten Formeln erfolgt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den durch die angehängten Ansprüche definierten Schutzbereich fallen.

**Patentansprüche**

1.  Verfahren zur Überwachung einer Brennkraftmaschine (1, 1') mit einer Einspritzanlage, insbesondere zur Verhinderung eines Dieselschlags bei einem Dieselmotor, mit den folgenden Schritten:

    - Erstellung einer theoretischen kalorischen Bilanz der Brennkraftmaschine (1, 1')
    - Bestimmung eines das Ungleichgewicht der theoretisch ermittelten kalorischen Bilanz wiedergebenden Diagnosesignals (ΔH), wobei das Diagnosesignal (ΔH) eine Störung der Einspritzanlage und/oder der Brennkraftmaschine (1, 1') anzeigt.

2.  Verfahren nach Anspruch 1,
    **gekennzeichnet durch**
    folgende Schritte:

    - Eingangsseitige Ermittlung einer kalorischen Zustandsgröße ($H_{BRENNSTOFF}$, $H_{FRISCHLUFT}$) der Brennkraftmaschine (1, 1')
    - Ausgangsseitige Ermittlung einer kalorischen Zustandsgröße ($H_{ABGAS}$, $W_{MECH,BKM}$, $Q_{THERM}$) der Brennkraftmaschine (1, 1')
    - Berücksichtigung der beiden Zustandsgrößen ($H_{BRENNSTOFF}$, $H_{FRISCHLUFT}$, $H_{ABGAS}$, $W_{MECH,BKM}$, $Q_{THERM}$) in der kalorischen Bilanz der Brennkraftmaschine (1, 1') zur Erzeugung des Diagnosesignals (ΔH).

**3.** Verfahren nach Anspruch 2,
**dadurch gekennzeichnet,**
**dass** die eingangsseitig ermittelte Zustandsgröße ($H_{BRENNSTOFF}$, $H_{FRISCHLUFT}$) die der Brennkraftmaschine (1, 1') durch Kraftstoff und/oder Frischluft zugeführte Enthalpie ist.

**4.** Verfahren nach mindestens einem der vorhergehenden Ansprüche,
**dadurch gekennzeichnet,**
**dass** die ausgangsseitig ermittelte Zustandsgröße ($H_{ABGAS}$) die von der Brennkraftmaschine (1, 1') durch den Abgasstrom abgeführte Enthalpie ist.

**5.** Verfahren nach mindestens einem der vorhergehenden Ansprüche,
**dadurch gekennzeichnet,**
**dass** die von der Brennkraftmaschine (1, 1') verrichtete mechanische Arbeit ($W_{MECH,BKM}$) ermittelt und in der kalorischen Bilanz der Brennkraftmaschine (1, 1') zur Erzeugung des Diagnosesignals ($\Delta H$) berücksichtigt wird.

**6.** Verfahren nach mindestens einem der vorhergehenden Ansprüche,
**dadurch gekennzeichnet,**
**dass** die Wärmeverluste ($Q_{THERM}$) der Brennkraftmaschine (1, 1') ermittelt und in der kalorischen Bilanz der Brennkraftmaschine (1, 1') zur Erzeugung des Diagnosesignals ($\Delta H$) berücksichtigt werden.

**7.** Verfahren nach mindestens einem der vorhergehenden Ansprüche,
**gekennzeichnet durch**
folgende Schritte:

   - Ermittlung der Abgastemperatur ($T_{ABGAS}$)
   - Ermittlung des Luftmassenstroms ($Q_{MAF}$)
   - Bestimmung der von der Brennkraftmaschine (1, 1') abgeführten Enthalpie ($H_{ABGAS}$) aus der Abgastemperatur ($T_{ABGAS}$) und dem Luftmassenstrom ($Q_{MAF}$).

**8.** Verfahren nach mindestens einem der Ansprüche 1 bis 6,
**gekennzeichnet durch**
folgende Schritte:

   - Ermittlung der Abgastemperatur ($T_{ABGAS}$)
   - Ermittlung der Drehzahl (n) der Brennkraftmaschine (1, 1')
   - Bestimmung der von der Brennkraftmaschine (1, 1') abgeführten Enthalpie ($H_{ABGAS}$) aus der Abgastemperatur ($T_{ABGAS}$), der Drehzahl der Brennkraftmaschine (1, 1') und dem vorgegebenen Hubraum der Brennkraftmaschine (1, 1').

**9.** Verfahren nach mindestens einem der vorhergehenden Ansprüche,
**gekennzeichnet durch**
folgende Schritte:

   - Ermittlung der Einspritzmenge ($m_{BRENN}$)
   - Bestimmung der der Brennkraftmaschine (1, 1') zugeführten Enthalpie ($H_{BRENNSTOFF}$) aus der Einspritzmenge ($m_{BRENN}$).

**10.** Verfahren nach mindestens einem der vorhergehenden Ansprüche,
**gekennzeichnet durch**
folgende Schritte:

   - Rückführung eines Teils des Abgasstroms der Brennkraftmaschine (1, 1') in den Ansaugbereich der Brennkraftmaschine (1, 1') entsprechend einer bestimmten Abgasrückführrate
   - Bestimmung der der Brennkraftmaschine (1, 1') zugeführten Enthalpie ($H_{IN}$) in Abhängigkeit von der Abgasrückführrate.

**11.** Verfahren nach mindestens einem der vorhergehenden Ansprüche,
**gekennzeichnet durch**

folgende Schritte:

- Vergleich des Diagnosesignals ($\Delta$H) mit einem ersten Grenzwert (K1)
- Notabschaltung der Brennkraftmaschine (1, 1') und/oder der Einspritzanlage beim Überschreiten des ersten Grenzwerts (K1).

**12.** Verfahren nach mindestens einem der vorhergehenden Ansprüche, **gekennzeichntet durch** folgende Schritte:

- Vergleich des Diagnosesignals ($\Delta$H) mit einem zweiten Grenzwert (K2)
- Aktivierung eines optischen oder akustischen Warnsignals beim Überschreiten des zweiten Grenzwerts.

**Claims**

**1.** Method for monitoring an internal combustion engine (1, 1') having an injection system, in particular for preventing dieseling in the case of a diesel engine, comprising the following steps:

- Establishing a theoretical calorific balance of the internal combustion engine (1, 1')
- Determining a diagnostic signal ($\Delta$H) reflecting the disequilibrium of the theoretically determined calorific balance, said diagnostic signal ($\Delta$H) indicating a malfunction in the injection system and/or the internal combustion engine (1, 1').

**2.** Method according to claim 1, **characterised by** the following steps:

- Input-side determination of a calorific state variable ($H_{FUEL}$, $H_{FRESH\_AIR}$) of the internal combustion engine (1, 1')
- Output-side determination of a calorific state variable ($H_{EXHAUST}$, $W_{MECH,ICE}$, $Q_{THERM}$) of the internal combustion engine (1, 1')
- Taking into account of the two state variables ($H_{FUEL}$, $H_{FRESH\_AIR}$, $H_{EXHAUST}$, $W_{MECH,ICE}$, $Q_{THERM}$) in the calorific balance of the internal combustion engine (1, 1') to produce the diagnostic signal ($\Delta$H).

**3.** Method according to claim 2, **characterised in that** the state variable ($H_{FUEL}$, $H_{FRESH\_AIR}$) determined on the input side is the enthalpy supplied to the internal combustion engine (1, 1') by fuel and/or fresh air.

**4.** Method according to at least one of the preceding claims, **characterised in that** the state variable ($H_{EXHAUST}$) determined on the output side is the enthalpy removed from the internal combustion engine (1, 1') by the exhaust gas flow.

**5.** Method according to at least one of the preceding claims, **characterised in that** the mechanical work ($W_{MECH,ICE}$) performed by the internal combustion engine (1, 1') is determined and taken into account in the calorific balance of the internal combustion engine (1, 1') to produce the diagnostic signal ($\Delta$H).

**6.** Method according to at least one of the preceding claims, **characterised in that** the thermal losses ($Q_{THERM}$) of the internal combustion engine (1, 1') are determined and taken into account in the calorific balance of the internal combustion engine (1, 1') to produce the diagnostic signal ($\Delta$H).

**7.** Method according to at least one of the preceding claims, **characterised by** the following steps:

- Determining the exhaust gas temperature ($T_{EXHAUST}$)
- Determining the mass air flow ($Q_{MAF}$)

- Determining the enthalpy ($H_{EXHAUST}$) removed from the internal combustion engine (1, 1') from the exhaust gas temperature ($T_{EXHAUST}$) and the mass air flow ($Q_{MAF}$).

**8.** Method according to at least one of claims 1 to 6,
**characterised by** the following steps:

- Determining the exhaust gas temperature ($T_{EXHAUST}$)
- Determining the RPM (n) of the internal combustion engine (1, 1')
- Determining the enthalpy ($H_{EXHAUST}$) removed from the internal combustion engine (1, 1') from the exhaust gas temperature ($T_{EXHAUST}$), the RPM of the internal combustion engine (1, 1') and the predefined cubic capacity of the internal combustion engine (1, 1').

**9.** Method according to at least one of the preceding claims,
**characterised by** the following steps:

- Determining the injection quantity ($m_{FUEL}$)
- Determining the enthalpy ($H_{FUEL}$) supplied to the internal combustion engine (1, 1') from the injection quantity ($m_{FUEL}$).

**10.** Method according to at least one of the preceding claims,
**characterised by** the following steps:

- Feeding back part of the exhaust gas flow of the internal combustion engine (1, 1') to the air intake of the internal combustion engine (1, 1') in accordance with a defined exhaust gas recirculation rate
- Determining the enthalpy ($H_{IN}$) supplied to the internal combustion engine (1, 1') as a function of the exhaust gas recirculation rate.

**11.** Method according to at least one of the preceding claims,
**characterised by** the following steps:

- Comparing the diagnostic signal ($\Delta H$) with a first limit value (K1)
- Emergency shutdown of the internal combustion engine (1, 1') and/or injection system if the first limit value (K1) is exceeded.

**12.** Method according to at least one of the preceding claims,
**characterised by** the following steps:

- Comparing the diagnostic signal ($\Delta H$) with a second limit value (K2)
- Activating a visual or audible warning signal if the second limit value is exceeded.

**Revendications**

**1.** Procédé pour surveiller un moteur à combustion interne (1, 1') équipé d'une installation d'injection, en particulier pour éviter un coup de diesel dans un moteur diesel, qui comprend les étapes suivantes :

- établissement d'un bilan calorifique théorique du moteur à combustion interne (1, 1')
- détermination d'un signal de diagnostic ($\Delta H$) qui reproduit le déséquilibre du bilan calorifique déterminé en théorie, où le signal de diagnostic ($\Delta H$) indique un défaut de l'installation d'injection et/ou du moteur à combustion interne (1, 1').

**2.** Procédé selon la revendication 1,
**caractérisé par** les étapes suivantes :

- détermination côté entrée d'une grandeur d'état calorifique ($H_{BRENNSTOFF}$, $H_{FRISCHLUFT}$) du moteur à combustion interne (1, 1')
- détermination côté sortie d'une grandeur d'état calorifique ($H_{ABGAS}$, $W_{MECH, BKM}$, $Q_{THERM}$) du moteur à combustion interne (1, 1')

- prise en compte des deux grandeurs d'état ($H_{BRENNSTOFF}$, $H_{FRISCHLUFT}$, $H_{ABGAS}$, $W_{MECH, BKM}$, $Q_{THERM}$) dans le bilan calorifique du moteur à combustion interne (1, 1') pour la production du signal de diagnostic ($\Delta H$).

3. Procédé selon la revendication 2,
   **caractérisé**
   **en ce que** la grandeur d'état ($H_{BRENNSTOFF}$, $H_{FRISCHLUFT}$) déterminée côté entrée est l'enthalpie apportée au moteur à combustion interne (1, 1') par le carburant et/ou par l'air frais.

4. Procédé selon au moins une des revendications précédentes,
   **caractérisé**
   **en ce que** la grandeur d'état ($H_{ABGAS}$) déterminée côté sortie est l'enthalpie évacuée du moteur à combustion interne (1, 1') par le courant des gaz d'échappement.

5. Procédé selon au moins une des revendications précédentes,
   **caractérisé**
   **en ce que** le travail mécanique ($W_{MECH, BKM}$) effectué par le moteur à combustion interne (1, 1') est calculé et pris en compte dans le bilan calorifique du moteur à combustion interne (1, 1') pour la production du signal de diagnostic ($\Delta H$).

6. Procédé selon au moins une des revendications précédentes,
   **caractérisé**
   **en ce que** les pertes de chaleur ($Q_{THERM}$) du moteur à combustion interne (1, 1') sont déterminées et prises en compte dans le bilan calorifique du moteur à combustion interne (1, 1') pour la production du signal de diagnostic ($\Delta H$).

7. Procédé selon au moins une des revendications précédentes,
   **caractérisé par** les étapes suivantes :

   - détermination de la température des gaz d'échappement ($T_{ABGAS}$)
   - détermination du débit massique d'air ($Q_{MAF}$)
   - détermination de l'enthalpie ($H_{ABGAS}$) évacuée du moteur à combustion interne (1, 1') à partir de la température des gaz d'échappement ($T_{ABGAS}$) et du débit massique d'air ($Q_{MAF}$).

8. Procédé selon au moins une des revendications 1 à 6,
   **caractérisé par** les étapes suivantes :

   - détermination de la température des gaz d'échappement ($T_{ABGAS}$)
   - détermination de la vitesse de rotation (n) du moteur à combustion interne (1, 1'),
   - détermination de l'enthalpie ($H_{ABGAS}$) évacuée du moteur à combustion interne (1, 1') à partir de la température des gaz d'échappement ($T_{ABGAS}$), de la vitesse de rotation du moteur à combustion interne (1, 1') et de la cylindrée prédéterminée du moteur à combustion interne (1, 1').

9. Procédé selon au moins une des revendications précédentes,
   **caractérisé par** les étapes suivantes :

   - détermination de la quantité injectée ($m_{BRENN}$)
   - détermination de l'enthalpie ($H_{BRENNSTOFF}$) apportée au moteur à combustion interne (1, 1') à partir de la quantité injectée ($m_{BRENN}$).

10. Procédé selon au moins une des revendications précédentes,
    **caractérisé par** les étapes suivantes :

    - recyclage d'une partie du courant des gaz d'échappement du moteur à combustion interne (1, 1') à la zone d'admission du moteur à combustion interne (1, 1') en fonction d'un taux donné de recyclage des gaz d'échappement
    - détermination de l'enthalpie ($H_{IN}$) apportée au moteur à combustion interne (1, 1') d'après le taux de recyclage des gaz d'échappement.

**11.** Procédé selon au moins une des revendications précédentes,
**caractérisé par** les étapes suivantes :

- comparaison du signal de diagnostic (ΔH) à une première valeur limite (K1)
- arrêt d'urgence du moteur à combustion interne (1, 1') et/ou de l'installation d'injection en cas de dépassement de la première valeur limite (K1).

**12.** Procédé selon au moins une des revendications précédentes,
**caractérisé par** les étapes suivantes :

- comparaison du signal de diagnostic (ΔH) à une deuxième valeur limite (K2),
- activation d'un signal d'alarme optique ou acoustique en cas de dépassement de la deuxième valeur limite.

FIG 1a

FIG 1b

EP 1 588 041 B1

```
                    ┌──────────┐
                    │  Start   │
                    └────┬─────┘
                         ↓
        ┌────────────────────────────────────┐
        │         Messung der                │
        │  Ansauglufttemperatur T_MAF        │
        └────────────────┬───────────────────┘
                         ↓
        ┌────────────────────────────────────┐
        │         Messung des                │
        │  Ansaugluftdrucks p_MAP            │
        └────────────────┬───────────────────┘
                         ↓
        ┌────────────────────────────────────┐
        │     Messung des Frischluft-        │
        │    massenstroms Q_MAF              │
        └────────────────┬───────────────────┘
                         ↓
        ┌────────────────────────────────────┐
        │   Ermittlung der Einspritzmenge    │
        │         m_BRENN                    │
        └────────────────┬───────────────────┘
                         ↓
        ┌────────────────────────────────────┐
        │   Berechnung der zugeführten       │
        │         Enthalpie:                 │
        │  H_BRENNSTOFF = m_BRENN · H_0      │
        └────────────────┬───────────────────┘
                         ↓
        ┌────────────────────────────────────┐
        │   Ermittlung der mechanischen      │
        │      Arbeit W_MECH,BKM             │
        └────────────────┬───────────────────┘
                         ↓
        ┌────────────────────────────────────┐
        │   Ermittlung der thermischen       │
        │     Verluste Q_THERM               │
        └────────────────┬───────────────────┘
                         ↓
        ┌────────────────────────────────────┐
        │ Berechnung der Frischluftenthalpie │
        │ H_FRISCHLUFT' = f_1(p_MAP,T_MAF,Q_MAF) │
        └────────────────┬───────────────────┘
                         ↓
        ┌────────────────────────────────────┐
        │  Berechnung der Abgasenthalpie     │
        │ H_ABGAS' = f_2(T_ABGAS,Q_MAF)      │
        └────────────────┬───────────────────┘
                         ↓
        ┌────────────────────────────────────┐
        │   Berechnung der Fehlergröße       │
        │ ΔH = H_FRISCHLUFT' + H_BRENNSTOFF  │
        │ - W_MECH,BKM - Q_THERM - H_ABGAS'  │
        └────────────────┬───────────────────┘
                         ↓
                    ┌──────────┐
                    │ Figur 2b │
                    └──────────┘
```

$$H_{BRENNSTOFF} = m_{BRENN} \cdot H_0$$

$$H_{FRISCHLUFT}' = f_1(p_{MAP}, T_{MAF}, Q_{MAF})$$

$$H_{ABGAS}' = f_2(T_{ABGAS}, Q_{MAF})$$

$$\Delta H = H_{FRISCHLUFT}' + H_{BRENNSTOFF} - W_{MECH,BKM} - Q_{THERM} - H_{ABGAS}'$$

**Fig. 2a**

Fig. 2b